# EUROPEAN PATENT SPECIFICATION

(11) **EP 1 129 424 B1**
(45) Date of publication and mention of the grant of the patent: **20.08.2003**
(21) Application number: 99971944.6
(22) Date of filing: 21.10.1999
(51) Int. Cl.: G06F 9/44

(54) **STEERING PROCESS AND STEERING MODEL BUILDER**
STEUERUNGSPROZESS- UND STEUERUNGSMODELLGENERATOR
PROCESSUS DE PILOTAGE ET GENERATEUR DE MODELES DE PILOTAGE

(30) Priority: 11.11.1998 WO PCT/EP98/07326
(43) Date of publication of application: 05.09.2001
(73) Proprietor: De Nooij, Thomas, 3572 HD Utrecht (NL); Koenders, Philip Jan, 1076 PS Amsterdam (NL)
(72) Inventor: De Nooij, Thomas, 3572 HD Utrecht (NL); Koenders, Philip Jan, 1076 PS Amsterdam (NL)
(74) Representative: van Westenbrugge, Andries
(86) International application number: EP9908140
(87) International publication number: WO00028447

(56) References cited:
- US-A- 4 841 441
- US-A- 5 241 645
- "INFORMATION DEVELOPMENT PROCESS MANAGEMENT SYSTEM" IBM TECHNICAL DISCLOSURE BULLETIN, vol. 36, no. 1, January 1993 (1993-01), pages 171-172, XP000333814 Armonk, NY, US

## Description

### 1. Introduction

This application for patent consist of the following :
- organisational background of the invention
- description of state of the art technologies
- context of the invention
- summary of the invention
- detailed description of the invention
- supplements

### 2. Organisational background of the invention

Organisations operate a large amount of steering processes. The function of steering processes is to support the management of operational processes. To perform this function steering processes produce information. The information is used to support the decision making on operational processes. The information is based on implicit or explicit steering models which are developed by the organisation in order to control the operational processes. Information systems are used in the steering processes to produce the information.

### 3. Description of the state of the art technologies

At this point of time various technologies or combinations of technologies are used to produce information.
1. On Line Analytical Processing (OLAP) software
   OLAP software is often used together with database technology. OLAP software is used to select (a part of) data collection. Furthermore the software is used to perform simple operations on the data and display the results of the operations. OLAP software pre-processes and stores the processed data collection to ameliorate response time in case of data selection.
2. Relational On Line Analytical Processing (ROLAP) software
   ROLAP is often used in combination with database technology as well. This type of software basically has the same functionality as OLAP. It is used to select large amounts of data, perform simple operations and display the results. In case of ROLAP no preprocessing takes place. A query is formulated in Structured Query Language (SQL) or a SQL related language. The query is executed on the database.
3. Functional software packages
   Functional software packages are used to run various large administrations such as financial administrations or employee/salary administrations. They offer reporting tools to define reports on the data which are available in the database.
4. Specialised control systems
   This type of software supports specific steering processes on a specific area like logistics or inventory control. Often they can only be used by specific organisations or branches like process industry or transport.
5. Spreadsheet
   Spreadsheet software is used to perform medium complex calculations. Spreadsheet software does not use database technology for data storage. Spreadsheet software offer various functions to display data.
6. A method as specified in the precharacterising part of Claim 1 is known in principle from US-A-5,241,645, for example.

### 4. Context of the invention

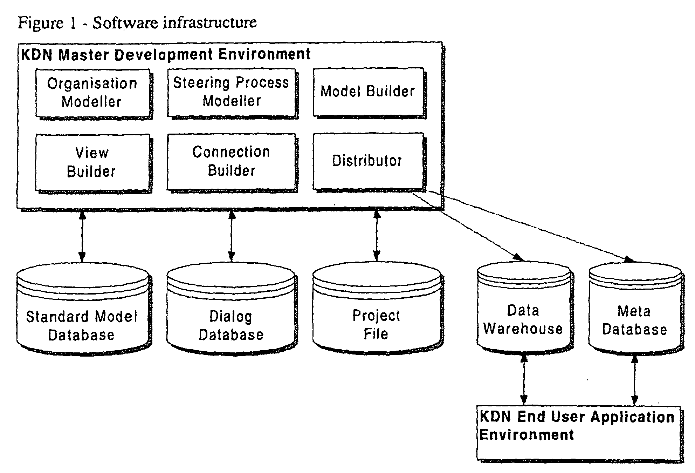

The invention is a part of an application development environment. The development environment is intended to develop software applications which support the management of operational processes (see figure 1). The development environment consists of the following subsystems :
- Organisation modeller
   This module is used to define the operational processes and the organisational units that are involved.
- Connection builder
   The connection builder is used to define connections to collect data from other systems.
- View builder
   This module is used to define the views on the data.
- Distributor
   The distributor creates the end user application.

The last two modules of the development environment make up the invention :
- Steering process modeller
- Model builder

### 5. Summary of the invention

The invention as claimed is intended to define steering processes by naming the steering steps and store them in the database. Furthermore the invention is intended to construct and store steering models. Steering models can be constructed by configuring standard steering models. Finally the invention is intended to connect steering steps with steering models and store the connections in the database.

### 6. Improvements compared to the state of the art technologies

The invention is innovative because none of the described technologies offer ways:
- to construct steering models in a predefined way by using configurable standard models
- to define steering processes by naming the steps and link them to the steering models
Because of this invention it is possible to develop applications that support steering processes much quicker and with less effort than nowadays.

### 7. Detailed description of the invention

The detailed description of the invention describes the process of defining a steering model, a sub model and a steering process and the linkage of steering models to a steering step.

### New Steering Model definition

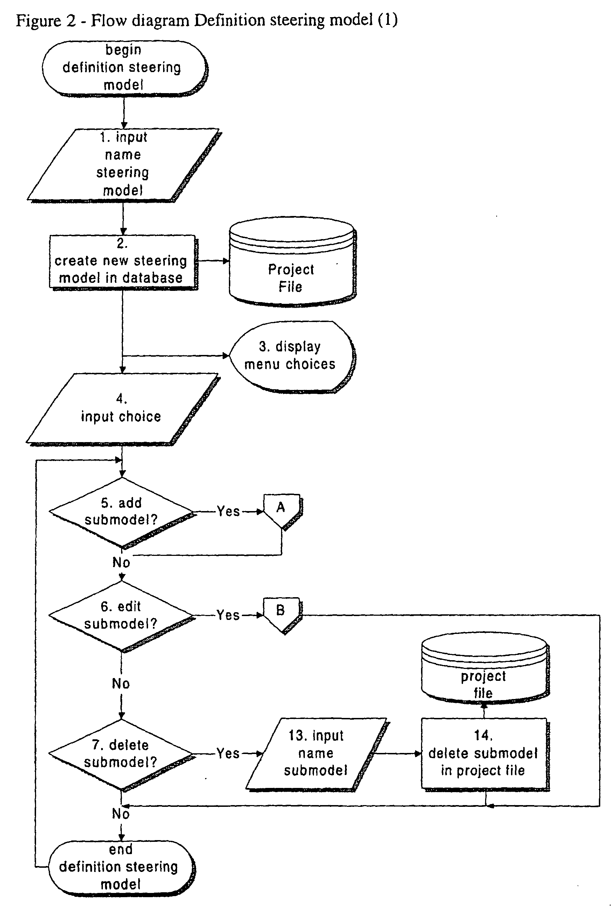

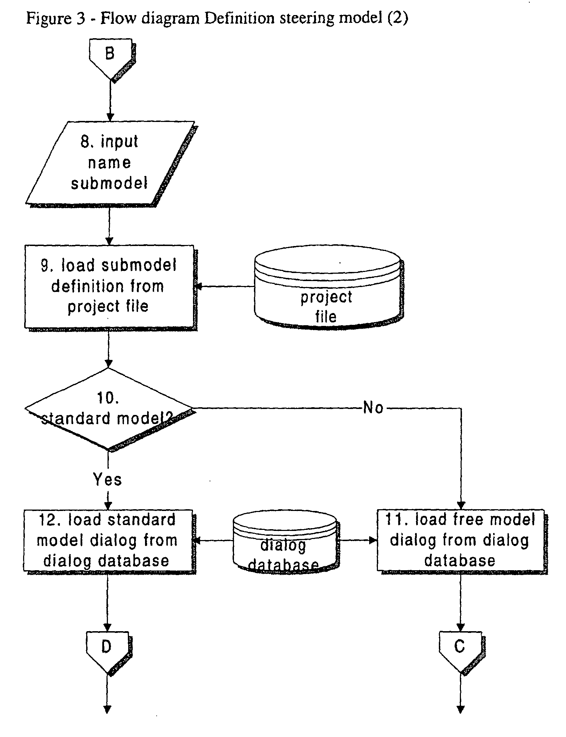

Figures 2 and 3 illustrate the process of defining a new steering model. The system asks for the name of the new steering model (1) and stores an empty steering model in the project file (2). Then the user is presented with three choices, namely defining a new sub model, editing an existing sub model or deleting an existing sub model (3).

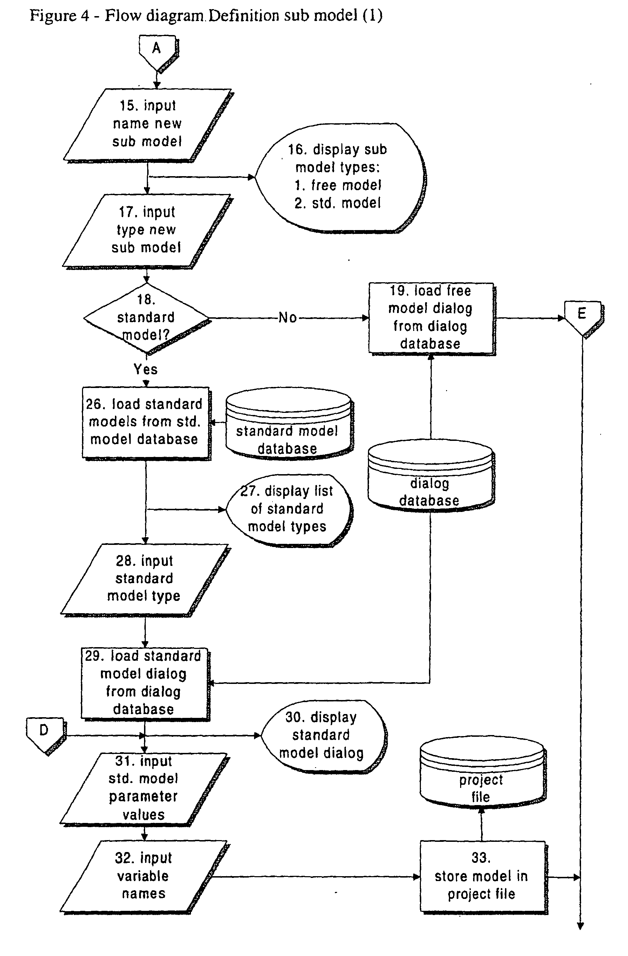

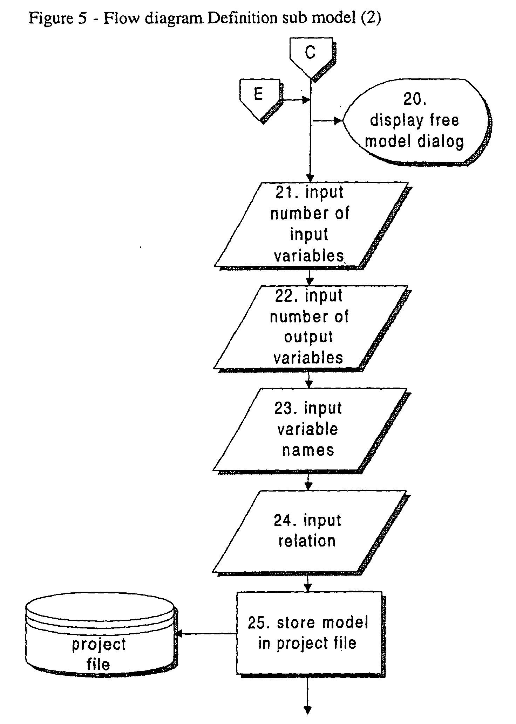

When the user chooses to add a new sub model (4, 5), the system asks for the name of the new sub model (Figures 4 and 5, step 15). The system asks the user for the type, 'free model' or 'standard model', of the new sub model (16, 17).
- When the user chooses for a free model, the system loads the free model dialog from the dialog database and displays it (18, 19, 20). The system asks for the number of input and output variables of the new sub model (21, 22) and to name a variable for each input and output (23). Then the user has to enter the (logical) relation between the input and output variables (24). The sub model is stored in the project file (25) and the system returns to the steering model definition.
- When the user chooses for a standard model (18), the system loads the available standard models from the standard model database (26) and displays a list of standard model types (27). The user chooses a standard model type and the system loads the accompanying dialog from the dialog database (28, 29). The dialog is displayed (30). The system asks the user to enter the values for the standard model parameters (31) and the variable name for each input and output (32). The sub model is stored in the project file (33) and the system returns to the steering model definition.

When the user chooses to edit an existing submodel (6), the system asks for the name of the sub model to be edited (8). The system loads the sub model definition from the project file (9). When the sub model is of type 'standard model' (10) the system loads the standard model dialog from the dialog database (11). When the type is 'free model', the system loads the free model dialog from the dialog database (12). Subsequently the flow continues at (B) and (C) for free models and standard models respectively.

When the user chooses to delete an existing submodel (7), the system asks for the name of the sub model to be deleted (13). The system deletes the sub model definition from the project file (14) and returns to the steering model definition.

### New Steering Process definition

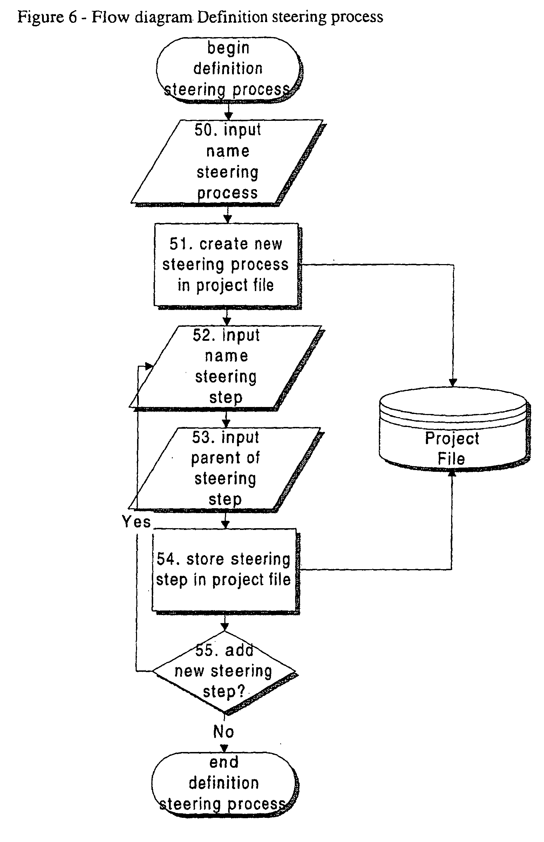

Figure 6 illustrates the process of defining a new steering process and steering steps. The systems asks to enter a name for the new steering process (50) and creates a new steering process in the project file (51). Each steering process consists of one or more steering steps. These steering steps can be nested, so each steering step is either a root step or has a parent step. For each steering process, the system will define the steering steps that belong to the steering process. The system asks to enter a name for a steering step (52) and to enter the parent step for the steering step (53). Subsequently the system stores the steering step in the project file (54) and offers to add another steering step (55).

### Connecting steering models to steering steps

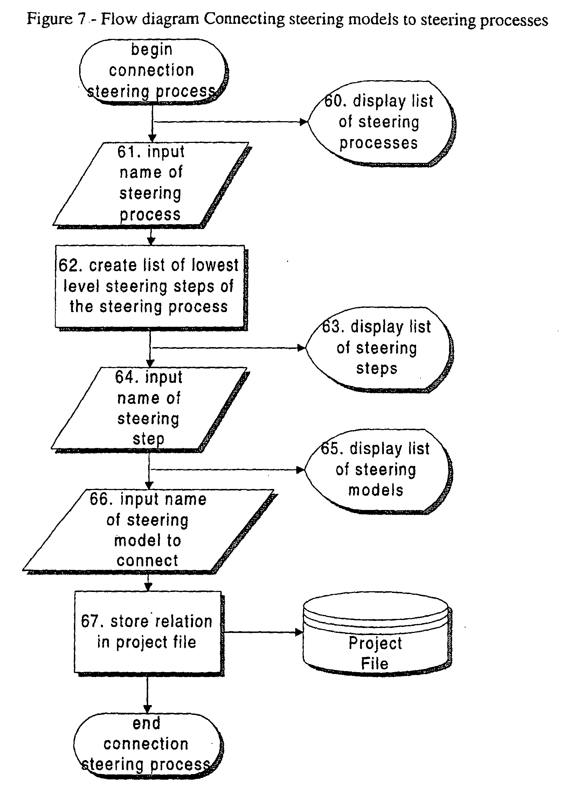

Each steering step of a steering process that has no sub steps (lowest level steering steps) has to be connected to a steering model. The system asks the name of a steering process (Figure 7, step 60, 61). The system creates a list of lowest level steering steps (62) of this steering process and asks the user to enter a name of a steering step (63, 64). Next, the system displays a list of available steering models (65) and asks the user to choose one (66). The relation between the steering step and the steering model is stored in the project file (67).

### 8. Examples

### Example of a steering process

The capacity planning process can be used to illustrate a steering process and steering steps. This process consist of the following steering steps:
1. *Demand forecast*
   The expected demand is forecasted using specific forecasting techniques.
2. *Generate capacity plan*
   A feasible capacity plan is generated using a capacity planning algorithm.
3. *Adapt capacity plan*
   The generated capacity plan can be manually adapted.
4. *Generate roster*
   Based on the capacity plan, a roster is generated to fill in the capacity need.

### Example of a steering model

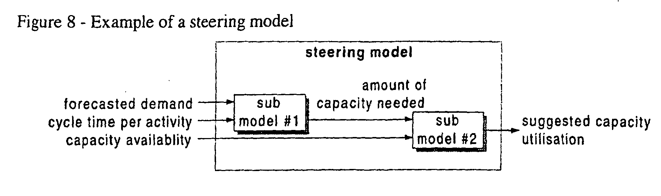

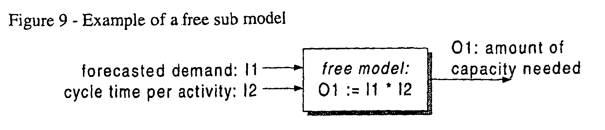

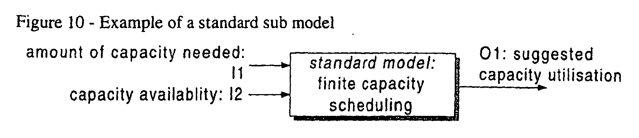

For the steering step "Generate capacity plan" the following steering model can be used (see Figure 8). This steering model has three input variables and one output variable. The steering model is defined using two sub models. The first sub model is a free model, which calculates the amount of capacity needed based on the demand forecast and de cycle time per activity (see Figure 9).
For the second sub model a standard model is used, namely "Finite Capacity Scheduling" (see Figure 10). This standard model generates a suggested capacity utilisation, using a standard capacity scheduling algorithm.

## Claims

1. Method for developing end user applications in an application development environment for supporting management of operational processes in an organisation, in which the application development environment comprises
• an organisation modeller to define the operational processes and the organisational units involved;
• a connection modeller to define connections with the operational processes and/or other systems for collection of data;
• a view builder to define views of the data;
• a distributor for creating an end user application,
**characterised in that**
the application development environment further comprises
• a model builder for defining steering models by the steps of:
identifying a steering model,
defining input variables,
defining output variables,
defining the relation between the input and output variables; and
• a steering process modeller for defining a steering process by the steps of:
identifying a steering process;
identifying at least one steering step for each steering process;
linking the steering steps in order to build the steering process model;
and the method further comprises for each steering process the steps of:
• displaying a list of lowest level steering steps associated with the steering process;
• after selection of one steering step, displaying a list of available steering models for selection;
• storing the relation between the selected steering step and the selected steering model; and
• linking the input/output variables associated with the selected steering model to the data.

2. Method according to claim 1, **characterised in that** the model builder performs the steps of storing the models in a standard model database, reading a model from the database, and/or modifying the identification, input/output variables and/or the relation between input/output variables.

3. Method according to claims 1 or 2, **characterised in that** the model builder further comprises the step of defining the number of and identifying the input and output variables.

4. Method according to claim 1, 2 or 3 **characterised in that** the steering steps comprise lower level steering steps, and the steering process builder comprises the further steps of linking the lower level steering steps.

5. Apparatus arranged for carrying out the method according to one of the claims 1 through 4.

6. Data carrier loaded with software which, after being loaded into a computer, provides the computer with the ability to carry out one of the methods according to claims 1 through 4.

7. Data signal comprising data which, after being loaded into a computer, provides the computer with the ability to carry out one of the methods according to claims 1 through 4.

## Patentansprüche

1. Verfahren zur Entwicklung von Endbenutzerapplikationen in einer Applikationsentwicklungsumgebung zur Unterstützung eines Managements von Betriebsprozessen in einer Organisation, wobei die Applikationsentwicklungsumgebung umfasst
• einen Organisationsmodellierer, um die Betriebsprozesse und die Organisationseinheiten, die betroffen sind, zu definieren;
• einen Verbindungsmodellierer, um Verbindungen mit den Betriebsprozessen und/oder anderen Systemen zum Sammeln von Daten zu definieren;
• einen Darstellungskonstrukteur, um Darstellungsarten der Daten zu definieren;
• einen Verteiler zur Erzeugung einer Endbenutzerapplikation,
**dadurch gekennzeichnet, dass**
die Applikationsentwicklungsumgebung weiter umfasst
• einen Modellkonstrukteur zum Definieren von Steuerungsmodellen durch die Schritte:
Identifizieren eines Steuerungsmodells,
Definieren von Eingabevariablen,
Definieren von Ausgabevariablen,
Definieren der Beziehung zwischen den Eingabe- und Ausgabevariablen; und
• einen Steuerungsprozessmodellierer zum Definieren eines Steuerungsprozesses durch die Schritte:
Identifizieren eines Steuerungsprozesses;
Identifizieren mindestens eines Steuerungsschritts für jeden Steuerungsprozess;
Verknüpfen der Steuerungsschritte, um das Steuerungsprozessmodell zu konstruieren;
und das Verfahren für jeden Steuerungsprozess weiter die Schritte umfasst:
• Anzeigen einer Liste von Steuerungsschritten niedrigster Stufe, die mit dem Steuerungsprozess verbunden sind;
• nach Auswahl von einem Steuerungsschritt: Anzeigen einer Liste von verfügbaren Steuerungsmodellen zur Auswahl;
• Speichern der Beziehung zwischen dem ausgewählten Steuerungsschritt und dem ausgewählten Steuerungsmodell; und
• Verknüpfen der Eingabe/Ausgabevariablen, die mit dem ausgewählten Steuerungsmodell verbunden sind, mit den Daten.

2. Verfahren nach Anspruch 1, **dadurch gekennzeichnet, dass** der Modellkonstrukteur die Schritte ausführt: Speichern der Modelle in einer Standardmodelldatenbank, Lesen eines Modells von der Datenbank und/oder Modifizieren der Identifizierung, Eingabe/Ausgabevariablen und/oder der Beziehung zwischen Eingabe/Ausgabevariablen.

3. Verfahren nach Anspruch 1 oder 2, **dadurch gekennzeichnet, dass** der Modellkonstrukteur weiter den Schritt umfasst: Definieren der Anzahl von und Identifizieren der Eingabe- und Ausgabevariablen.

4. Verfahren nach Anspruch 1, 2 oder 3, **dadurch gekennzeichnet, dass** die Steuerungsschritte Steuerungsschritte niedrigerer Stufe umfassen, und der Steuerungsprozesskonstrukteur die weiteren Schritte umfasst: Verknüpfen der Steuerungsschritte niedrigerer Stufe.

5. Vorrichtung, die zur Durchführung des Verfahrens nach einem der Ansprüche 1 bis 4 angeordnet ist.

6. Datenträger, der mit Software geladen ist, die, nachdem sie in einen Rechner geladen ist, den Rechner mit dem Vermögen versieht, eines der Verfahren nach den Ansprüchen 1 bis 4 durchzuführen.

7. Datensignal, umfassend Daten, die, nachdem sie in einen Rechner geladen sind, den Rechner mit dem Vermögen versehen, eines der Verfahren nach den Ansprüchen 1 bis 4 durchzuführen.

## Revendications

1. Procédé de développement d'application d'utilisateur final dans un environnement de développement d'applications pour le soutien de gestion de tâches opérationnelles dans une organisation, dans lequel l'environnement de développement d'applications comprend :
■ un logiciel de modélisation d'organisation pour déterminer les tâches opérationnelles et les unités organisationnelles impliquées ;
■ un logiciel de modélisation de connexion pour déterminer des connexions avec les tâches opérationnelles et/ou avec d'autres systèmes pour collecter des données ;
■ un logiciel de génération de vue pour déterminer des vues des donnés ;
■ un logiciel de distribution pour créer une application d'utilisateur final,
**caractérisé en ce que**
l'environnement de développement d'applications comprend en outre
■ un générateur de modèle pour déterminer des modèles de pilotage comprenant les étapes :
- d'identification d'un modèle de pilotage,
- de détermination des variables d'entrée,
- de détermination des variables de sortie,
- de détermination de la relation entre les variables d'entrée et de sortie ; et
■ un logiciel de modélisation de processus de pilotage pour déterminer un processus de pilotage comprenant les étapes :
- d'identification d'un processus de pilotage ;
- d'identification d'au moins une étape de pilotage pour chaque processus de pilotage ;
- de mise en relation des étapes de pilotage pour la construction du modèle de processus de pilotage ;
et **en ce que** le procédé comprend en outre pour chaque processus de pilotage les étapes :
■ d'affichage d'une liste d'étapes de pilotage de plus bas niveau associées avec le processus de pilotage ;
■ d'affichage pour sélection d'une liste de modèles de pilotage disponibles, après sélection d'une étape de pilotage ;
■ de stockage de la relation entre l'étape de pilotage sélectionnée et le modèle de pilotage sélectionné ; et
■ de mise en relation avec les données des variables d'entrée/sortie associées avec le modèle de pilotage sélectionné.

2. Procédé selon la revendication 1, **caractérisé en ce que** le générateur de modèle effectue les étapes de stockage des modèles dans une base de données de modèles standard, de lecture d'un modèle à partir de la base de donnée, et/ou de modification des variables d'identification et d'entrée/sortie et/ou de modification de la relation entre les variables d'entrée/sortie.

3. Procédé selon la revendication 1 ou 2, **caractérisé en ce que** le générateur de modèle effectue en outre l'étape de détermination du nombre de et d'identification des variables d'entrée/sortie.

4. Procédé selon la revendication 1, 2 ou 3, **caractérisé en ce que** les étapes de pilotage comprennent des étapes de pilotage de bas niveau, et **en ce que** le générateur de processus de pilotage comprend l'étape supplémentaire de mise en relation des étapes de pilotage de bas niveau.

5. Dispositif agencé pour la mise en oeuvre du procédé selon l'une quelconque des revendications 1 à 4.

6. Support de données chargé avec un logiciel qui, après chargement des données sur un ordinateur, permet à l'ordinateur de mettre en oeuvre l'un des procédés selon les revendications 1 à 4.

7. Signal de données comprenant des données qui, après chargement des données sur un ordinateur, permet à l'ordinateur de mettre en oeuvre l'un des procédés selon les revendications 1 à 4.
